# EUROPEAN PATENT SPECIFICATION

(11) **EP 0 383 175 B1**
(45) Date of publication and mention of the grant of the patent: **13.10.1993**
(21) Application number: 90102386.1
(22) Date of filing: 07.02.1990
(51) Int. Cl.: B65G 21/14, A01F 25/20, B65G 41/00

(54) **Extendable desilage conveyor arm**
Ausziehbarer Arm eines Siloentnahmeförderers
Bras extensible d'un transporteur de désilage

(30) Priority: 17.02.1989 IT 4152689
(43) Date of publication of application: 22.08.1990
(73) Proprietor: Faccia, Tiziano, I-35026 Conselve (Padova) (IT)
(72) Inventor: Faccia, Tiziano, I-35026 Conselve (Padova) (IT)
(74) Representative: Modiano, Guido, Dr.-Ing.

(56) References cited:
- DE-A- 2 943 844
- FR-A- 2 596 945
- GB-A- 1 123 681
- GB-A- 1 140 923
- GB-A- 2 035 245
- US-A- 3 687 276
- US-A- 4 474 287
- US-A- 4 624 357

## Description

The present invention relates to an extendable desilage conveyor arm which can be used, particularly but not exclusively, in zootechny for loading machines for mixing and distributing fodder, forage, fibrous products etc. from their storage locations.

Devices for loading said materials in mixing and distribution machines are already known; one of them consists of a movable arm which is articulated to the machine and supports a cutter provided with blades which cuts and removes the product to be desilaged for use.

The cut product falls onto a lower collector provided with a conveyance duct inside which a scroll is arranged which conveys it into the mixing machine.

Such a device, however, is rather complicated in structure and use, so another device has been studied and produced which comprises an arm with a box-like structure in which the material cut and removed by an end cutter is conveyed and sent to the input of the mixing machine.

Even such a device, however, has disadvantages which are mostly related to the considerable length of the arm which is required for practical utilization reasons but which does not allow its complete downward articulation when not in use so as to give the machine or the frame onto which it is fixed a minimum-bulk configuration.

The structure of the arm is furthermore rigid, and loading from points at different distances can be achieved only by moving the machine or the frame.

Another disadvantage resides in the fact that if the arm is comprised within the structure of the machine it is mounted directly on the mixing container, so that it is necessary to secure the entire machine to the ground during its operation.

A desilage arm showing an articulated structure is known from the French document FR-A-2 596 945. The loading system thereof is not very efficient however, being discontinuous.

Conveying devices of the heavy-type, provided with conveying means, generally for mining activities, are disclosed in the documents DE-A-29 43 844 and US-A-4 474 287. Such devices are bulky and even if the device in the U.S.-document is telescopic they are not fit for farming activities.

The aim of the present invention is to provide a desilage conveyor arm which solves the above described disadvantages of the prior art and can therefore be extended and shortened according to the requirements of use.

A consequent primary object is to provide a desilage conveyor arm which has the minimum possible bulk when not in use.

Another important object is to provide a desilage conveyor arm the structure whereof is simple and easy to produce.

Not least object is to provide a desilage conveyor arm which can be produced with easily commercially available elements and materials.

This aim, these objects and others which will become apparent hereinafter are achieved by an extendable desilage conveyor arm, as defined in claim 1.

The characteristics and advantages will become apparent from the detailed description of an embodiment of the invention, illustrated only by way of non-limitative example in the accompanying drawings, wherein:

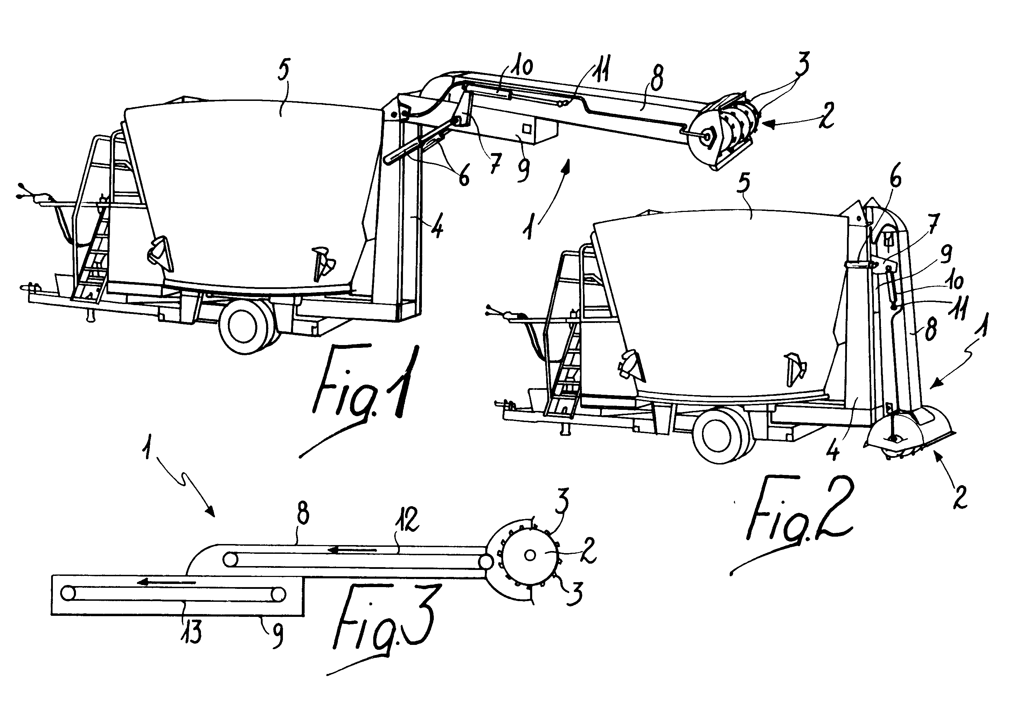

figure 1 is a perspective view of a desilage conveyor arm according to the invention in operative configuration, applied to a fodder mixing and distribution truck;
figure 2 is a view of the arm of figure 1 applied to the same machine but in inoperative configuration;
figure 3 is a schematic longitudinal sectional view of the desilage conveyor arm according to the invention;
figures 4 and 5 are views of the arm according to the invention in operative and inoperative configuration applied to a self-propelled mixing truck.

With reference to the above figures, an extendable desilage conveyor arm comprises a preferably metallic box-like conveyance structure 1, an end whereof has a cutter 2 provided with blades 3 and adapted to cut and remove the product to be desilaged for use.

At the opposite end, the structure 1 is articulated to a supporting frame 4 and leads onto the free upper portion of a mixing truck 5.

The articulation of the structure 1 is conveniently controlled and actuated by hydraulic pistons 6 which act between the frame 4 and supports 7 which are fixed to said structure 1.

In the present embodiment, said box-like structure 1 is composed by two box-like portions, respectively 8 and 9, which are superimposed and slidable on one another, and have, in the mutual coupling regions, openings which are adapted to provide a single conveyance duct.

The sliding of the two portions 8 and 9 is advantageously actuated and controlled by hydraulic pistons 10 which act, still in the particular illustrated embodiment, between said supports 7 rigidly associated with the portion 9 and to points 11 for coupling to the box-like portion 8.

Still according to the invention, each portion 8 and 9 is internally provided with a conveyor belt, respectively 12 and 13.

In this manner, as illustrated in figure 3, the material collected by the cutter 2 is conveyed along the portion 8 by the belt 12, then unloaded onto the belt 13 which conveys it along the portion 9 until it is unloaded inside the mixing truck 5.

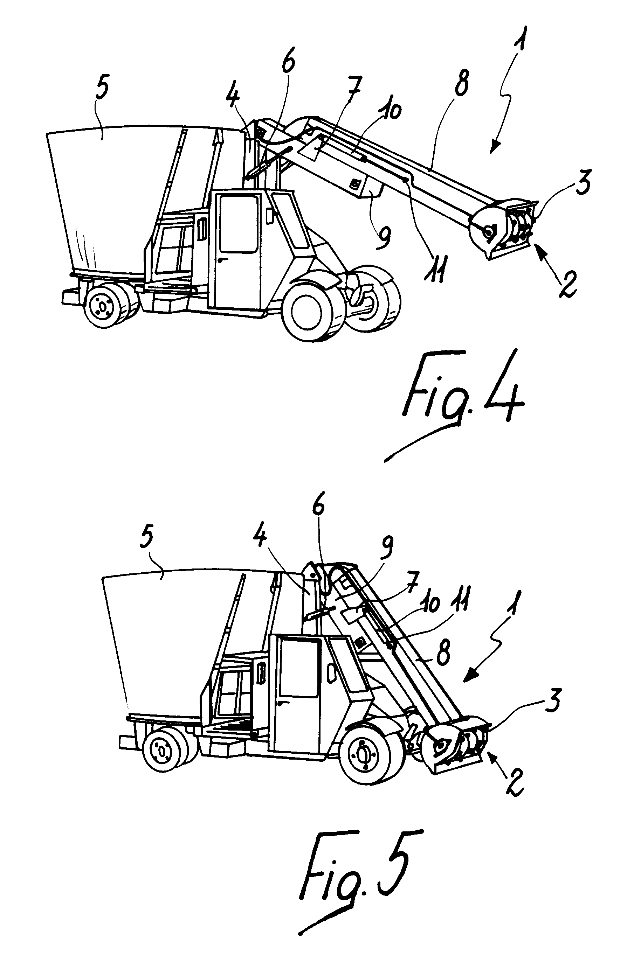

Said desilage conveyor arm can naturally be applied to any kind of mixing truck, for example a self-propelled one as illustrated in figures 4 and 5, or to any kind of agricultural machine or fixed or self-propelled frame.

As also visible in the figures, the characteristic of extendability of the arm allows to obtain, during work, considerable operative lengths, reaching the material to be loaded even if it is located at a certain distance from the truck.

At the end of the operations, the arm can be completely retracted and aligned to the machine, thus considerably reducing its bulk and consequently the bulk of the entire assembly.

It should be noted that since the arm is mounted on the supporting frame which is separate from the rest of the machine, during its operation it is not necessary to secure the entire structure to the ground but only the part related to its frame.

From what has been described above, the aim and objects of the present invention are therefore brilliantly achieved, the arm being furthermore structurally simple and composed of easily available elements.

The invention thus conceived is susceptible to numerous modifications and variations, all of which are within the scope of the claims.

Thus, for example, the conveyor belts may be replaced with other equivalent conveyor means, such as for example scrolls, chains etc., and the cutter can be replaced with any other equivalent means for the cutting and removal of material.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An extendable desilage conveyor arm of the kind comprising a closed box-like structure (1) with conveyance means (12, 13) disposed therein, material cutting and removing means (2) being provided at an end of said box-like structure (1), characterized in that the end of said box-like structure (1) opposite to said cutting and removing means (2) is pivotally articulated to a supporting frame (4), said box-like structure (1) comprising at least two superimposed portions (8, 9) which are slidable on one another and connected by openings in the mutual coupling regions so as to form a continuous conveyance duct, each of said superimposed portions (8, 9) being internally provided with said material conveyance means (12, 13).

2. A desilage conveyor arm according to claim 1, characterized in that said material conveyance means comprise conveyor belts (12,13) arranged so that one belt (12) of one portion (8) unloads material onto the belt (13) of the successive portion (9).

3. A desilage conveyor arm according to claim 1, characterized in that said material conveyance means (12, 13) may comprise conveyors suitable for material conveyance, such as scroll conveyors or chain conveyors.

4. A desilage conveyor arm according to any of the preceding claims, characterized in that mutual sliding between two successive portions (8,9) of said structure is provided by means of hydraulic pistons (10) arranged parallel to said portions (8,9) and rigidly coupled thereto.

5. A desilage conveyor arm according to any of the preceding claims, characterized in that said supporting frame (4) is arranged separate from the rest of a mixing truck (5) so that during operation only the part related to said supporting frame is secured to the ground.

6. A desilage conveyor arm according to any of the preceding claims characterized in that said box-like structure (1) with conveying means (12, 13) leads onto the upper portion of a mixing truck (5).

## Patentansprüche

1. Ausfahrbarer Silageförderarm in Form einer geschlossenen kastenförmigen Konstruktion (1), die einen eingebauten Förderer (12,13) und an ihrem einen Ende eine Materialschneid- und Abführvorrichtung (2) aufweist, **dadurch gekennzeichnet,** daß die kastenförmige Konstruktion (1) mit ihrem der Schneid- und Abführvorrichtung (2) gegenüberliegenden Ende an einem Tragrahmen (4) angelenkt ist und zumindest zwei übereinander angeordnete, gegeneinander verschiebbare Abschnitte (8,9) aufweist, die im jeweiligen Überlappungsbereich über Öffnungen miteinander in Verbindung stehen und so einen durchgehenden Förderkanal bilden, wobei jeder der übereinander angeordneten Abschnitte (8,9) einen eingebauten Förderer (12,13) aufweist.

2. Silageförderarm nach Anspruch 1, **dadurch gekennzeichnet,** daß der genannte Materialförderer Förderbänder (12,13) aufweist, die so angeordnet sind, daß das eine Förderband (12) des einen Abschnitts (8) Material auf das Förderband (13) des folgenden Abschnitts (9) abwirft.

3. Silageförderarm nach Anspruch 1, **dadurch gekennzeichnet,** daß der genannte Materialförderer (12,13) zur Materialförderung geeignete Förderer wie z. B. Schnecken- oder Kettenförderer aufweist.

4. Silageförderarm nach einem der vorhergehenden Ansprüche, **dadurch gekennzeichnet,** daß zur jeweiligen Verschiebung der beiden aufeinanderfolgenden Abschnitte (8,9) gegeneinander Hydraulikkolben (10) vorgesehen sind, die parallel zu den Abschnitten (8,9) angeordnet und mit ihnen fest verbunden sind.

5. Silageförderarm nach einem der vorhergehenden Ansprüche, **dadurch gekennzeichnet,** daß der Tragrahmen (4) separat von dem übrigen Teil eines Mischwagens (5) angeorndet ist, so daß während des Arbeitseinsatzes nur der dem Tragrahmen zugeordnete Teil gegenüber dem Boden gesichert ist.

6. Silageförderarm nach einem der vorhergehenden Ansprüche, **dadurch gekennzeichnet,** daß die kastenförmige Konstruktion (1) mit dem Förderer (12,13) auf den oberen Abschnitt eines Mischwagens (5) fördert.

## Revendications

1. Un bras extensible de convoyeur de désilage du type comprenant une structure fermée en forme de caisson (1), à l'intérieur de laquelle sont disposés des moyens de transport (12, 13), des moyens de coupe et d'enlèvement de matière (2) étant placés à une extrémité de la structure en forme de caisson (1), caractérisé en ce que l'extrémité de la structure **(1),**
opposée aux moyens de coupe et d'enlèvement (2), est articulée de façon pivotante sur un châssis de support (4), cette structure en forme de caisson (1) comprenant au moins deux parties superposées (8, 9) qui peuvent coulisser l'une sur l'autre et qui sont reliées par des ouvertures dans la région de leur accouplement mutuel de façon à former un conduit de transport continu, les moyens de transport de matière (12, 13) étant disposés à l'intérieur de chacune des parties superposées (8, 9).

2. Un bras de convoyeur de désilage selon la revendication 1, caractérisé en ce que les moyens de transport de matière comprennent des courroies de convoyeur (12, 13), disposées de façon qu'une courroie (12) d'une partie (8) décharge de la matière sur la courroie (13) de la partie suivante (9).

3. Un bras de convoyeur de désilage selon la revendication 1, caractérisé en ce que les moyens de transport de matière (12, 13) peuvent comprendre des convoyeurs appropriés pour le transport de la matière, tels que des convoyeurs à hélice ou des convoyeurs à chaîne.

4. Un bras de convoyeur de désilage selon l'une quelconque des revendications 1 à 3 , caractérisé en ce que le glissement mutuel entre deux parties successives (8, 9) de la structure, est obtenu au moyen de pistons hydrauliques (10) qui sont disposés parallèlement à ces parties (8, 9) et accouplés à ceux-ci de façon rigide.

5. Un bras de convoyeur de désilage selon l'une quelconque des revendications 1 à 4, caractérisé en ce que le châssis de support (4) est réalisé séparément du reste d'une benne de mélange (5), de façon que, pendant le fonctionnement, seule la partie liée au châssis de support soit fixée au sol.

6. Un bras de convoyeur de désilage selon l'une quelconque des revendications 1 à 5, caractérisé en ce que la structure en forme de caisson (1), avec les moyens de transport (12, 13), conduit à la partie supérieure d'une benne de mélange (5).
